# EUROPEAN PATENT APPLICATION

(11) **EP 3 567 270 A1**
(43) Date of publication of application: **13.11.2019**
(21) Application number: 18171094.8
(22) Date of filing: 07.05.2018
(51) Int. Cl.: F16D 66/00

(54) **BRAKE DEVICE, MEASUREMENT SYSTEM FOR A BRAKE DEVICE FOR VEHICLES AND METHOD OF OPERATING SUCH MEASUREMENT SYSTEM**

(71) Applicant: KNORR-BREMSE Systeme für Schienenfahrzeuge GmbH, 80809 München (DE)
(72) Inventor: Katona, Géza, 1238 Budapest (HU); Istvan, Babos, 1238 Budapest (HU)
(74) Representative: Kleine, Hubertus

(57) **Abstract**

The invention relates to a measurement system (10) for a brake device (1) for vehicles which comprises a force sensor and an evaluation circuit (13) that is connected to the force sensor for determining an operation of the brake device (1) from a signal provided by the force sensor. The measurement system (10) is characterized in that the force sensor is designed to generate energy for operating the evaluation circuit (13). The invention further relates to a brake device (1) equipped with such measurement system (10) and a method for operating a measurement system (10).

## Description

The invention relates to a measurement system for a brake device for vehicles, especially a rail vehicle, the system comprising a force sensor and an evaluation circuit that is connected to the force sensor for determining an operation of the brake device from a signal provided by the force sensor. The invention further relates to a brake device with a measurement system and a method of operating such measurement system.

Measurement systems in brake devices are inter alia used to determine correct operation of a brake before and during operation. Usually, brake tests before operation are a required standard procedure before a vehicle, especially a rail vehicle is started. It has to be ensured that all brakes are ready to operate.

Different techniques are known to deduce information about a correct operation of a brake while the rail vehicle is stationary. In some cases a brake status is deduced from a movement of a brake actuator, for example a piston. This method might be problematic since it only provides information on the operation of the brake in an indirect manner. A loss of brake pad for example could not be determined this way. Brakes in rail vehicles are usually operated pneumatically. In another known monitoring method the braking pressure in the air supply system is monitored to deduce information on a correct operation of the brake. Here again, information is derived in an indirect manner. Possible failures might exist that could not be determined by this measurement method.

A more direct measurement system and method is described in US patent US 8,770,351 B2. This document relates to a disk brake with a brake caliper that carries brake pads that are pressed against a brake disk. A sensor is provided on a force transmission path from a brake cylinder to the brake pad. In one embodiment, the sensor is a piezo element that provides an electrical signal indicating a predefined minimum force transmission onto the brake pad. The piezo element can be connected to an evaluation circuit that transmits a signal indicating correct operation of the brake to a monitoring system of the rail vehicle. Since the presence of a suitable braking force is the most direct indication of the correct operation of a brake, this system is most reliable.

The evaluation of the signal provided by the sensor and the transmission of the information on the correct operation of the brake requires electrical energy for operation and therefore access to an electrical power supply system of the rail vehicle. While this is usually available for passenger trains, this is usual not the case for freight trains.

It is therefore a subject of the present invention to present a brake device, a measurement system and a method of operating such measurement system for determining correct operation of a brake device of a vehicle, even if an electrical power system of the vehicle is not available at the brake device.

This object is solved by a brake device, a measurement system and a method for operating such measurement system according to the independent claims. Further developments and advantageous embodiments are subject of the dependent claims.

According to the invention, a measurement system of the above mentioned kind is characterized in that the force sensor is designed to generate energy for operating the evaluation circuit. This way, a system is provided that is independent of an external energy supply. Also, long-term energy storage is not needed, which would require a lot of maintenance to ensure uninterrupted supply. Instead, energy harvesting is used to provide the energy needed. Energy is generated by the measurement process itself.

In an advantageous embodiment, a piezo sensor is used as the force sensor. Piezo sensors are based on piezo crystals. On application of force piezo sensors generate energy in the form of a potential difference between opposite crystal faces. The potential difference can be picked up by electrodes and leads to a flowing current if the electrodes are connected via an external circuit.

In a further advantageous embodiment, the piezo sensor is shaped to be mounted between a brake shoe and a brake pad of the brake device. The sensor is therefore directly subjected to a braking force acting on the brake pad.

In a further advantageous embodiment, the evaluation circuit comprises an energy storage unit, in particular a capacitor, for storing energy provided by the force sensor. The capacitor acts as short term energy storage and prolongs a current pulse generated by the piezo sensor. The evaluation unit thus has more time to react on the signal of the sensor and can e.g. signal a correct operation of the brake device.

In a further advantageous embodiment, the evaluation circuit comprises a wireless transmitter for emitting a wireless signal indicative of the operation of the brake device. A wireless system is particularly interesting for backfitting solution. A suitable wireless technique could make use of RFID (radio frequency identification) -chips or chips based on another wireless technique like GSM, Bluetooth, Wi-Fi, LoRa, or radio (SW, MW, LW, AM/FM).

The capacitor and the wireless transmitter can for example be electrically arranged in a series connection. The force sensor, the capacitor and the wireless transmitter are preferably configured and coordinated in such a way that the wireless transmitter emits the wireless signal when a predetermined minimum braking force is reached. This way a very simple evaluation-, detection-, and signalling system is implemented.

A brake device for vehicles, especially rail vehicles is characterized in that it is equipped with a measurement system that comprises a force sensor and an evaluation circuit as described before. The same advantages as described in connection with the measurement system arise.

A method of operating a measurement system for a brake device for vehicles, especially rail vehicles is characterized by the following steps: A braking force is applied to a component of the brake device and the force sensor. As a result, an electrical signal is generated by the force sensor. The electrical signal is provide to the evaluation circuit, which is operated on energy that is contained in the electrical signal. Again, the advantage is to be independent of an external energy source or energy supply.

The invention will be explained in more detail hereafter with reference to the following drawings that show an exemplary embodiment. In the figures:
- Figure 1: shows a schematic drawing of a part of a brake device with a measurement system; and
- Figure 2: shows an electric block diagram of the measurement system shown in Figure 1

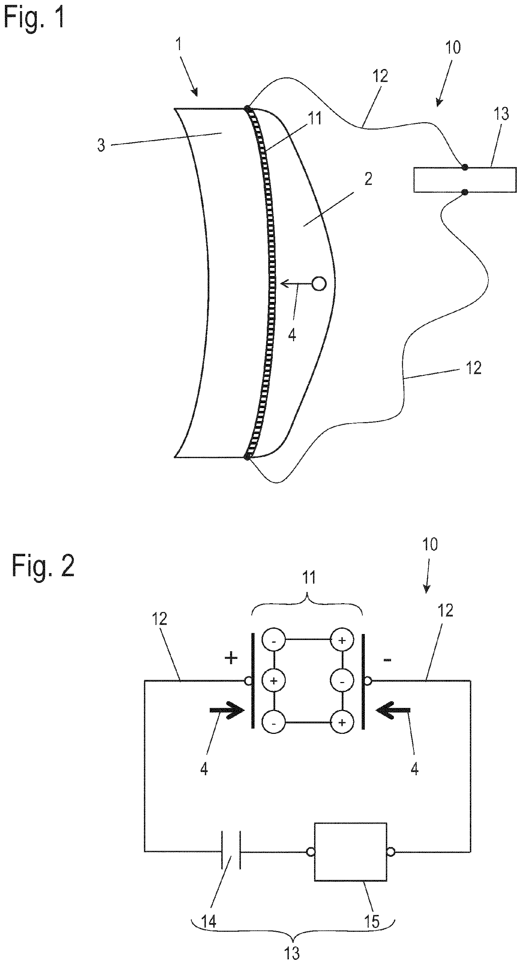

Figure 1 shows parts of a brake device 1 with a measurement system 10 in a schematic drawing.

The brake device 1 is represented by a brake pad holder 2 and an associated brake pad 3. In an altenative embodiment (not shown) the brake device 1 could be represented by a brake shoe holder and an associated brake shoe. The brake pad holder 2 and the brake pad 3 are for example part of a brake of a rail vehicle, in particular a freight train. In the example shown, the brake device 1 is a wheel brake that acts on a circumference of a wheel of the rail vehicle. The brake pad holder 2 is mechanically connected to a brake activator, usually a pneumatically operated brake piston that mechanically acts on the brake pad holder via one or more brake levers. For simplification, the afore-mentioned components of the brake device 1 are not shown in Figure 1. It is noted that the measurement system 10 described in more detail below could also be used in connection with different types of brake devices, for example with a disk brake device used in a rail vehicle.

The measurement system 10 comprises a piezo sensor 11 as a force sensor. In the embodiment shown, the piezo sensor 11 is arranged between the brake pad holder 2 and the brake pad 3. A braking force 4 applied to the brake pad holder 2 in order to press the brake pad 3 against the wheel is transmitted from the brake pad holder 2 to the brake pad 3 via the piezo sensor 11. The piezo sensor 11 is therefore directly exposed to the braking force 4. A piezo sensor, for example a piezo crystal is characterized in that a mechanical force applied to the sensor results in a potential difference provided at opposite crystal surfaces of the sensor. Usually, electrodes are applied to these opposite crystal faces and a potential difference (i.e. a voltage) can be measured across the electrodes if the piezo crystal is subject to force acting on it.

The crystal faces, respectively the electrodes of the piezo sensor 11 are connected to connection wires 11 that lead to an evaluation circuit 13. On operation of the brake device 1, for example for test purposes before operation of the rail vehicle, the braking force 4 is applied to the brake pad holder 2 and accordingly experienced by the piezo sensor 11. A voltage supplied by the piezo sensor 11 in reaction to the braking force 4 is evaluated by the evaluation circuit 13 for determining whether the brake device 1 operates correctly or not.

According to the present invention, the piezo sensor 11 does not only work as a sensor for providing information about the braking force 4, but is also used to provide energy for operating the evaluation circuit 13. Accordingly, energy harvesting by the piezo sensor 11 itself is used for powering up the evaluation circuit 13.

Figure 2 shows a preferred embodiment of the measurement system 10, as for example used in connection with the brake device 1 of Figure 1 in a schematic block diagram. The piezo sensor 11 is shown schematically with its ionic crystal and electrodes attached to the crystal faces. If the braking force 4 acts on the piezo sensor 11, a DC (direct current) voltage is provided by the piezo sensor 11 as indicated by the "+" and "-" symbols.

In the embodiment shown in Figure 2, the evaluation circuit 13 comprises a series connection of a capacitor 14 and a wireless transmitter 15, for example an RFID (radio frequency identification) transmitter. The voltage supplied by the piezo sensor 11 leads to a charging of the capacitor 14 and accordingly to a current flowing through the wireless transmitter 15. Due to the capacitor 14, the sudden voltage peak supplied by the piezo sensor 11 is transferred to a current that flows for a prolonged time. The wireless transmitter 15 is designed to emit a wireless signal if a sufficient current flows for a sufficient time. Accordingly, a wireless signal indicating correct operation of the brake device 1 is emitted if a sufficient braking force 4 is applied on the brake pad holder 2.

A voltage with the opposite polarity is supplied by the piezo sensor 11 if the braking force 4 is released again. Accordingly, a current flows generated by the charged capacitor 14 and it flows through the wireless transmitter 15 in a different direction than in the afore-mentioned case. The wireless transmitter 15 can be designed to emit a second wireless signal indicating the successful release of the brake.

If the wireless transmitter 15 is an RFID device, the wireless signal emitted contains an identification number associated with the respective brake device 1. Accordingly, a superordinate receiver can be mounted in the rail vehicle that receives the transmitted signals and monitors correct operation of one or more of the brake devices.

Other possible embodiments of wireless transmitters could be base on GSM, Bluetooth, Wi-Fi, LoRa, radio (SW, MW, LW, AM/FM)-, or any other electromagnetic wave transmitters.

As shown in the embodiment of Figure 1, a preferred location of the piezo sensor 11 is between the brake pad holder 2 and the brake pad 3. In alternative embodiments of the measurement system 10, the piezo sensor 11 can be positioned in different locations, for example in hinge points between levers and the brake pad holder 2 or between the piston of a brake actuator and levers of the brake device 1.

Any joints or hinges that are part of the force transmission path of the brake device 1 can be used as locations for the piezo sensor 11.

### REFERENCES

- 1: brake device
- 2: brake pad holder / shoe holder
- 3: brake pad/brake shoe
- 4: braking force

- 10: measurement system
- 11: piezo sensor
- 12: connecting wires
- 13: evaluation circuit
- 14: capacitor
- 15: wireless transmitter

## Claims

1. Measurement system (10) for a brake device (1) for vehicles, especially rail vehicles the measurement system (10) comprising a force sensor and an evaluation circuit (13) that is connected to the force sensor for determining an operation of the brake device (1) from a signal provided by the force sensor,
**characterized in that**
the force sensor is designed to generate energy for operating the evaluation circuit (13).

2. Measurement system (10) according to claim 1, wherein the force sensor is a piezo sensor (11).

3. Measurement system (10) according to claim 2, wherein the piezo sensor (11) is shaped to be mounted between a brake pad holder / shoe holder (2) and a brake pad / shoe (3) of the brake device (1).

4. Measurement system (10) according to one of claims 1 to 3, wherein the evaluation circuit (13) comprises an energy storage unit for storing energy provided by the force sensor.

5. Measurement system (10) according to claim 4, wherein the energy storage unit is a capacitor (14).

6. Measurement system (10) according to one of claims 1 to 5, wherein the evaluation circuit (13) comprises a wireless transmitter (15) for emitting a wireless signal indicative of the operation of the brake device (1).

7. Measurement system (10) according to claims 4 and 6, wherein the capacitor (14) and the wireless transmitter (15) are electrically arranged in a series connection.

8. Measurement system (10) according to claim 6 or 7, wherein the wireless transmitter (15) is a RFID-, GSM-, Bluetooth-, Wi-Fi-, LoRa-, radio (SW, MW, LW, AM/FM)-, or electromagnetic wave device.

9. Measurement system (10) according to claim 7 or 8, wherein the force sensor, the capacitor (14) and the wireless transmitter (15) are configured and coordinated such that the wireless transmitter (15) emits the wireless signal when a predetermined minimum braking force is reached.

10. Brake device (1) for vehicles, especially rail vehicles,
**characterized in that**
the brake device (1) is equipped with a measurement system (10) comprising a force sensor and an evaluation circuit (13) according to one of claims 1 to 9.

11. Method of operating a measurement system (10) for a brake device (1) for vehicles, especially rail vehicles, the measurement system (10) comprising a force sensor and an evaluation circuit (13) that is connected to the force sensor for determining an operation of the brake device (1) from a signal provided by the force sensor,
**characterized by the following steps**
- Applying a braking force to a component of the brake device (1) and the force sensor;
- Generating an electrical signal by the force sensor;
- Providing the electrical signal to the evaluation circuit (13); and
- Operating the evaluation circuit (13) by using energy that is contained in the electrical signal.
